(19) Europäisches Patentamt
European Patent Office
Office européen des brevets

(11) **EP 4 083 868 A1**

(12) **EUROPEAN PATENT APPLICATION**

(43) Date of publication:
**02.11.2022 Bulletin 2022/44**

(21) Application number: **21382368.5**

(22) Date of filing: **27.04.2021**

(51) International Patent Classification (IPC):
***G06N 3/04*** *(2006.01)*     ***G06N 3/08*** *(2006.01)*

(52) Cooperative Patent Classification (CPC):
**G06N 3/0454; G06N 3/082; G06N 3/084**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Telefonica Digital España, S.L.U.
28013 Madrid (ES)**

(72) Inventors:
• **KOURTELLIS, Nicolas
28013 MADRID (ES)**

• **PERINO, Diego
28013 MADRID (ES)**
• **KATEVAS, Kleomenis
28013 MADRID (ES)**
• **MARIN FABREGAS, Eduard
28013 MADRID (ES)**
• **MO, Fan
SW7 2BX LONDON (ES)**

(74) Representative: **Herrero & Asociados, S.L.
Cedaceros, 1
28014 Madrid (ES)**

(54) **FEDERATED LEARNING FOR PRESERVING PRIVACY**

(57)    A method and system for preserving privacy using federated learning, FL, between a server (11) and clients (12), comprising the following steps:
(1): if needed, transferring public knowledge (110), through a secure channel between a server TEE (111) and a client TEE (121);
(2): initializing a DNN model within the server TEE (111) using random weights or public knowledge (110);
(3): broadcasting one or more target training layer(s) through the secure channel from the server (11) to each client (12);
(4): local training of the target layer via FL within the client TEE (121) using a model partitioned execution;
(5): reporting by every client (12) to the server (11), through the secure channel, the updated data of the trained layer;
(6): FL aggregating the reported data within the server TEE (111);
and repeating the steps from (4) to (6) for each layer or block of layers to be trained.

FIG. 1

**Description**

**TECHNICAL FIELD**

The present invention has its application within the information and communications technologies for telecommunication networks, more specifically, relates to machine learning (ML) techniques and more particularly, to a method and a system to enhance performance of Federated Learning (FL) in preserving the privacy of data used to build deep neural networks (DNN) models.

**BACKGROUND OF THE INVENTION**

Privacy-preserving machine learning (PPML) is an emerging space from the machine learning technical domain, which enables someone to build machine-learning models that respect the privacy of data used to build said models. These novel methods provide guarantees on how much information an attacker can learn about the data used to train these models, as well as the structure of the models themselves.

Training deep neural networks (DNNs) on multiple devices locally and building an aggregated global model on a server, namely federated learning (FL), has drawn significant attention from academia and industry, even being deployed in real systems. Federated Learning (FL) is a natural evolution of centralized machine learning (ML) methods, but unlike traditional ML, where a server collects all user data at a central point and trains a global model, in FL users only send the locally updated model parameters to the server. Indeed, FL enables local training on user's mobile devices, avoiding user data to be transferred to centralized servers, and can be enhanced with differential privacy mechanisms. This allows training a model without the need for users to reveal their data, thus preserving their privacy.

Unfortunately, recent works have shown that adversaries can execute attacks to retrieve sensitive information from the model parameters themselves. Prominent examples of such attacks are data reconstruction and various types of inference attacks. The fundamental reason why these attacks are possible is because as a DNN learns to achieve their main task, it also learns irrelevant information from users' training data that is inadvertently embedded into the model. Note that in FL scenarios, these attacks can be launched both at server and client sides.

A brief overview of the three main categories of privacy-related attacks in FL (data reconstruction, property inference, and membership inference attacks) is as follows:

i) Data Reconstruction Attack (DRA): A DRA aims at reconstructing original input data based on the observed model or its gradients. It works by inverting model gradients based on generative adversarial attack-similar techniques, and consequently reconstructing the corresponding original data used to produce the gradients. DRAs are effective when attacking DNN's early layers, and when gradients have been only updated on a small batch of data (i.e., less than 8). As the server typically observes updated models of each client in plaintext, it is more likely for this type of leakage to exist at the server. By subtracting updated models with the global model, the server obtains gradients computed w.r.t. clients' data during the local training.

ii) Property Inference Attack (PIA): The goal of PIA is to infer the value of private properties in the input data. This attack is achieved by building a binary classifier trained on model gradients updated with auxiliary data and can be conducted on both server and client sides. Specifically, property information, which also refers to the feature/latent information of the input data, is easier to be carried in stronger aggregation. Even though clients in FL only observe multiple snapshots of broadcast global models that have been linearly aggregated on participating clients' updates, property information can still be well preserved, providing attack points to client-side adversaries.

iii) Membership Inference Attack (MIA): The purpose of MIA is to learn whether specific data instances are present in the training dataset. One can follow a similar attack mechanism as PIA to build a binary classifier when conducting MIA, although there are other methods, e.g., using shadow models. The risk of MIA can exist on both the server and client sides. Moreover, because membership is 'high-level' latent information, adversaries can perform MIA on the final (well-trained) model and its last layer.

Motivated by these attacks, researchers have recently introduced several countermeasures to prevent them. Existing solutions can be grouped into three main categories depending on whether they rely on: (i) homomorphic encryption, (ii) multi-party computation, or (iii) differential privacy. However, these solutions suffer from important privacy or performance limitations, or negatively affect the utility or fairness of the model. While homomorphic encryption is practical in both high-end and mobile devices, it only supports a limited number of arithmetic operations in the encrypted domain. Alternatively, the use of fully homomorphic encryption has been employed to allow arbitrary operations in the encrypted domain, thus supports ML. Yet, this comes with too much computational overhead, making it impractical for mobile devices. Similarly, multi-party computation-based solutions cause significant computational overhead. Also, in some cases, differential privacy can fail to provide sufficient privacy and can negatively impact the utility and fairness of the model as well as the system performance. Overall, none of the existing solutions meets all requirements, hampering their adoption.

More recently, the use of hardware-based Trusted Execution Environments (TEEs) has been proposed as a promising way to preclude attacks against DNN model parameters and gradients. A TEE enables the creation of a secure area on the main processor that provides strong confidentiality and integrity guarantees to any data and code it stores or processes. In a system with a TEE, there are untrusted applications running on a Rich Execution Environment (REE) and trusted applications running on the TEE. TEEs allow to securely store data and execute arbitrary code on an untrusted device almost at native speed through secure memory compartments. TEEs realize strong isolation and attestation of secure compartments by enforcing a dual-world view where even compromised or malicious system (i.e., privileged) software in the normal world - also known as Rich Operating System Execution Environment (REE) - cannot gain access to the secure world. This allows for a drastic reduction of the Trusted Computing Base (TCB) since only the code running in the secure world needs to be trusted. Another key aspect of TEEs is that they allow arbitrary code to run inside almost at native speed. In order to keep the TCB as small as possible, current TEEs have limited memory; beyond this, TEEs are required to swap pages between secure and unprotected memory, which incurs a significant overhead and hence must be prevented.

All these advantages of TEEs, together with their recent commoditization both in high-end devices (e.g., servers) and mobile devices (e.g., smartphones) make TEEs suitable candidates to allow fully privacy-preserving ML modelling. However, in order to keep the TCB as small as possible, current TEEs have limited memory. This makes it impossible to simultaneously place all DNN layers inside the TEE. As a result, prior work has opted for using TEEs to conceal only the most sensitive DNN layers from adversaries, leaving other layers unprotected (for example, running the last layers with a Trusted Application inside TEEs to defend against MIAs, while leaving the first layers unprotected). While this approach was sufficient to mitigate some attacks against traditional ML where clients obtain only the final model, in FL scenarios the attack surface is significantly larger. FL client devices are able to observe distinct snapshots of the model throughout the training, allowing them to realize attacks at different stages. Therefore, it is of utmost importance to protect all DNN layers (instead of the last layers only) using the TEE.

Instead of training the complete DNN model in an end-to-end fashion, the model can be trained layer-by-layer from scratch, i.e., greedy layer-wise training. This method starts by training a shallow model (e.g., one layer) until its convergence. Next, it appends one more layer to the converged model and trains only this new layer. Usually, for each greedily added layer, the model developer builds a new classifier on top of it in order to output predictions and compute training loss. Consequently, these classifiers provide multiple early exits, one per layer, during the forward pass in inference. Furthermore, recently this method was shown to scale for large datasets and to achieve performance comparable to regular end-to-end ML. Notably, all previous studies on layer-wise training focused on generic ML.

Therefore, there is a need of an improved FL-based framework, which address the above stated challenges and drawbacks to fully prevent private information leakage at both server and client-side under FL scenarios.

SUMMARY OF THE INVENTION

The problems found in prior art techniques are generally solved or circumvented, and technical advantages are generally achieved, by the disclosed embodiments which provide methods and systems to provide mobile systems with a privacy-preserving federated learning (PPFL) framework to limit privacy leakages in federated learning (FL).

The proposed PPFL framework allows clients to collaboratively train a deep neural networks (DNN) model while keeping the layers of the DNN model always inside Trusted Execution Environments (TEEs) during training. TEEs are used on clients for local training, and on servers for secure aggregation, leveraging the widespread presence of TEEs in high-end and mobile devices, so that model/gradient updates can be hidden from adversaries.

The proposed PPFL framework is based on greedy layer-wise training and aggregation to train each model's layer inside the trusted area until its convergence, overcoming the constraints posed by the limited TEE memory, and providing comparable accuracy of complete model training at the price of a tolerable delay. The layer-wise approach supports sophisticated settings such as training one or more layers (block) each time, which can better deal with heterogeneous data at the client-side and speed up the training process.

An aspect of the present invention refers to a method for preserving privacy using Federated Learning with Trusted Execution Environments which comprises the steps defined in claim 1.

Another aspect of the present invention refers to a system implementing the privacy-preserving method based on FL described above, comprising one server with a Trusted Execution Environment (TEE) and a set of (one or more) TEE-enabled clients which agree on the training of a DNN model via Federated Learning, the server and the client configured to perform correspondingly the steps defined in claim 1.

The invention is defined by the independent claims. The dependent claims define advantageous embodiments.

**BRIEF DESCRIPTION OF THE DRAWINGS**

To complete the description that is being made and with the object of assisting in a better understanding of the characteristics of the invention, in accordance with a preferred example of practical embodiment thereof, accompanying said description as an integral part thereof, is a set of drawings wherein, by way of illustration and not restrictively, the following has been represented:

Figure 1 shows a schematic diagram of a framework for privacy-preserving based on federated learning or PPFL, according to a preferred embodiment in the present invention.

Figure 2 shows a graphic of the test accuracy of training a DNN model, for each of three known DNN models, versus the communication rounds that each model layer is trained when using PFFL, according to an experimental scenario.

Figure 3 shows a histogram of the client performance measured in terms of CPU time, memory usage and energy comsuption, when training a DNN model, for each of three known DNN models, when using PFFL in a layer-per-layer basis, according to an experimental scenario.

Figure 4 shows a graphic of the test accuracy of training a DNN model, for each of two known DNN models, versus the communication rounds that each block of model layers is trained when using PFFL, according to an experimental scenario.

Figure 5 shows a histogram of the client performance measured in terms of CPU time, memory usage and energy comsuption, when training a DNN model, for each of two known DNN models, when using PFFL with block of layers, according to an experimental scenario.

Figure 6 shows a graphic of the test accuracy of training with public models versus the communication rounds that model layers are trained using PFFL to bootstrap the model training, according to an experimental scenario.

Figure 7 shows a histogram of the client performance measured in terms of CPU time, memory usage and energy comsuption, when training with public models bootstrapped by PFFL, according to an experimental scenario.

Figure 8 shows a graphic of the test accuracy of training a DNN model, for each of two known DNN models, using PPFL bootstrapped with public datasets for both independent and identically distributed cases and non-independent and identically distributed cases, according to an experimental scenario.

DESCRIPTION OF EMBODIMENTS

The present invention may be embodied in other specific systems and/or methods. The described embodiments are to be considered in all respects as only illustrative and not restrictive. In particular, the scope of the invention is indicated by the appended claims rather than by the description and figures herein. All changes that come within the meaning and range of equivalency of the claims are to be embraced within their scope.
The embodiments of the present invention propose a practical PPFL framework to fully prevent private information leakage at both server and client-side under FL scenarios.

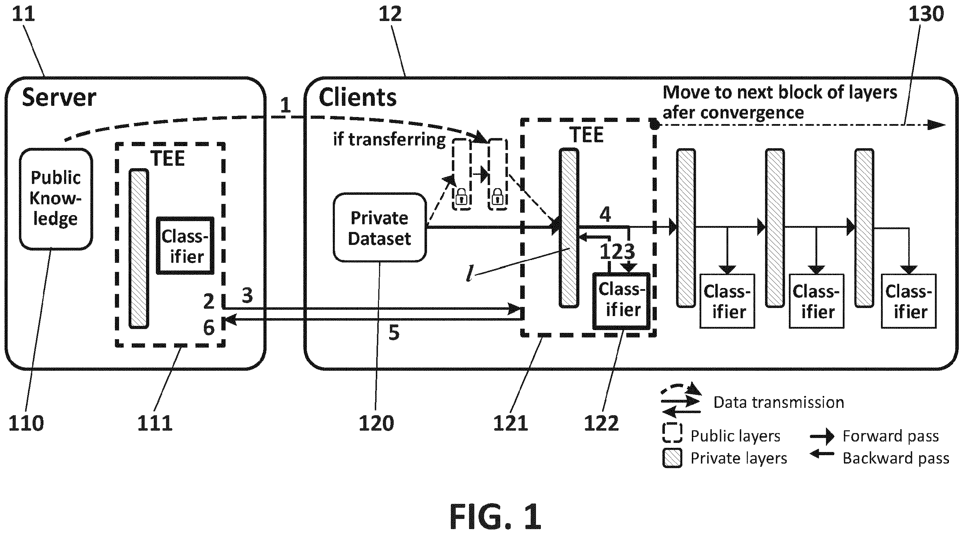

Figure 1 provides an overview of the PPFL framework and the various steps of the greedy layer-wise training and aggregation. In general, and starting from the first layer, each layer is trained until convergence, before moving to the next layer. This way, PPFL aims to achieve full privacy preservation without significantly increasing system cost.
The main phases and steps executed in the PPFL framework shown by Figure 1 are referred to as follows:

- Configuration phase:

Step **1:** Transferring public knowledge **110,** if any, through a secure channel.
Step **2:** Initialization of a DNN model inside a TEE or trusted executed enviroment **111** at the server-side **11.**
Step **3:** Broadcast of the DNN model to the TEE or trusted executed enviroment **121** of each client **12.**

- Reporting phase:

Step **4:** Layer-wise local training of the DNN model inside the TEE **121** at the client-side **12.**
Step **5:** Reporting the trained DNN model to the TEE **111** of the server **11.**

Step **6**: Secure aggregation in the TEE **111** of the server **11**.

Steps **4, 5** and **6** are carried out for every layer (or block of layers) of the DNN model.

PPFL provides the following functionalities:

- Privacy-by-design Guarantee : PPFL ensures that layers are always protected from adversaries while they are being updated. Privacy risks depend on the aggregation level and frequency with which they happen, when exposing the model or its layers. In PPFL, lower-level information (i.e., original data and attributes) is not exposed because updated gradients during training are not accessible from adversaries (they happen inside the TEEs). This protects against data reconstruction and property inference attacks. However, when one of such layers is exposed after convergence, there is a risk of membership inference attack (MIA). Based on the observation that higher-level information is only sensitive in the last layer, making it vulnerable to MIAs, PPFL keeps the last layer inside the clients TEEs after training to avoid this risk on the final model.

- Device Selection: After the server **11** and a set of TEE-enabled clients agree on the training of a DNN model via FL, clients inform the server **11** about their memory constraints of clients' TEE **121**. The server **11** then (re)constructs a DNN model suitable for this set of TEE-enabled clients and selects the clients **12** that can accommodate the model layers within their TEE **121**. In each round, the server **11** can select new clients and the device selection algorithm can follow existing FL approaches, such as the one described in "An efficiency-boosting client selection scheme for federated learning with fairness guarantee" by Huang, T., et al. (arXiv preprint arXiv:2011.01783, year 2020) and the approach disclosed in "Client selection for federated learning with heterogeneous resources in mobile edge" by Nishio, T., et al. (IEEE International Conference on Communications, IEEE ICC, year 2019, pp. 1-7).

- Secure Communication Channels: The server **11** establishes two secure communication channels with each of its clients **12**: (i) one from its REE to the client's REE (e.g., using TLS) to exchange data with clients and (ii) a logical one from its TEE to the client's TEE for securely exchanging private information (e.g., model layer training information). In the latter case, the transmitted data is encrypted using cryptographic keys known only to the server TEE **111** and client TEE **121** and is sent over the REE-REE channel. It is important to note that the secure REE-REE channel is only an additional security layer. All privacy guarantees offered by PPFL are based on the hardware-backed cryptographic keys stored inside TEEs.

- Model Initialization and Configuration: The server **11** configures the model architecture, decides the layers to be protected by TEEs, and then initializes model parameters, which in general are weights to be updated/learnt during training, inside the TEE (step **2** of Figure 1). The latter ensures clients' local training starts with the same weight distribution. In addition, the server **11** configures other training hyper-parameters such as learning rate, batch size, and epochs, before transmitting such settings to the clients **12** (step **3**, Fig. 1). Model parameters and hyper-parameters are "standard" parameters that a DNN training process needs for its execution such as learning rate, any dropout rate, etc. Hyperparameters, usually set before optimizing the weights and bias, are the variables which determines the neural network structure (e.g., number of hidden units) and the variables which determine how the network is trained (e.g., learning rate). In cases of typical ML tasks such as image recognition where public knowledge is available such as pre-trained DNN models, or public datasets with features similar to the client private data, the server **11** can transfer this knowledge (especially in cross-device FL) in order to bootstrap and speed up the training process. In both cases, this knowledge is contained in the first layers. Thus, the clients **12** leave the first layers frozen and only train the last several layers of the global model. This training process is similar to the concept of transfer learning but public knowledge is transferred in a federated manner. In PPFL, the server **11** can learn from public models. Thus, during initialization, the server **11** first chooses a model pre-trained on public data that have a similar distribution with private data. The server **11** keeps the first layers, removes the last layer(s), and assembles new layer(s) atop the reserved first ones. These first layers are transferred to clients **12** and are always kept frozen (step **1**, Fig. 1). New layers, attached to the reserved layers, are trained inside each client TEE **121**, and then aggregated inside the server TEE **111** (steps **2-6** of Figure 1). In learning from public datasets, the server **11** first performs an initial training to build the model based on public datasets.

- Local Training: After model transmission and configuration using secure channels, each client **12** starts local training on their data on each layer via a model partitioned execution technique (step **4** of Figure 1).

- Reporting and Aggregation: Once local training of a layer is completed inside TEEs **121**, all participating clients **12** report the layer parameters to the server **11** through secure channels (step **5** of Figure 1). Finally, the server **11** securely aggregates the received parameters within its TEE **111** and applies a FL Aggregation technique (i.e., by aggregating from all federated parties (clients) and computing the average over all such contributed models), such as FedAvg (Federated Averaging) wherein the model is updated multiple times before sending the model back to the server **11** for aggregation, resulting in a new global model layer (step **6** of Figure 1). FedAvg is described, for example, in "Communication-efficient learning of deep networks from decentralized data" by McMahan, B., et al.

(Artificial Intelligence and Statistics, year 2017, PMLR, pp. 1273-1282).

In order to address the problem of limited memory inside a TEE when training a DNN model, the greedy layer-wise learning technique of the proposed PPFL works in the FL setting. The procedure of layer-wise training and aggregation is detailed in the following Algorithm 1 and Algorithm 2:

---

## Algorithm 1: PPFL-Server with TEE

**Input:**

- Number of all clients: $N$
- Client $n$'s TEE memory size: $S^{(n)}$
- Memory usage of layers $\{1, ..., L\}$ in training (forward and backward pass in total): $\{S_1, ..., S_L\}$
- Communication rounds: $R$

**Output:** Aggregated final parameters: $\{\theta_1^0, ..., \theta_L^0\}$

*% Layer-wise client updates*
**for** $l \in \{1, ..., L\}$ **do**

    *% Select clients with enough TEE memory*
    Initialize participating client list $J = \{\}$
    **for** $n \in \{1, ..., N\}$ **do**
        **if** $S^{(n)} > S_l$ **then**
            $J \leftarrow J \cup \{n\}$
    Initialize $\theta_l$ (parameters of layers $l$) in TEE

    **for** $r \in \{1, ..., R\}$ **do**
        **for** $j \in J$ **do**
            *% clients' local updating: see Algorithm 2*
            $\theta_l^{(j)} = \text{ClientUpdate}(l, \theta_l)$

        *% FedAvg with Secure Aggregation*
        $\theta_l = \frac{1}{\text{size}(J)} \sum_{j \in J} \theta_l^{(j)}$ in TEE

    Save $\theta_l$ from TEE as $\theta_l^0$ in REE

**return** $\{\theta_1^0, ..., \theta_L^0\}$

---

---

### Algorithm 2: ClientUpdate($l, \theta_l$) with TEEs

---

**Initialization:**

- Local dataset $\mathcal{X}$: data $\{x\}$ and labels $\{y\}$
- Trained final parameters of all previous layers, i.e., $\theta_1^0, \theta_2^0, ..., \theta_{l-1}^0$
- Number of local training epochs: $E$
- Activation function: $\sigma()$ and loss function: $\ell$
- Classifier: $C()$

**Input:**

- Target layer: $l$
- Broadcast parameters of layer $l$: $\theta_l$

**Output:** Updated parameters of layer $l$: $\theta_l$

*% Weights and biases of layers $1, ..., (l-1)$ and $l$*
**for** $i \in \{1, ..., l-1\}$ **do**
$\quad \{W_i, b_i\} \leftarrow \theta_i^0$
$\{W_l, b_l\} \leftarrow \theta_l$ in TEE

*% Training process*
**for** $e \in \{1, .., E\}$ **do**
$\quad$ **for** $\{x, y\} \in \mathcal{X}$ **do**

$\qquad$ *% Forward pass*
$\qquad$ Intermediate representation $T_0 = x$
$\qquad$ **for** $i \in \{1, ..., l-1\}$ **do**
$\qquad\quad T_i = \sigma(W_i T_{i-1} + b_i)$

$\qquad T_l = \sigma(W_l T_{l-1} + b_l)$
$\qquad \ell \leftarrow \ell(C(T_l), y)$

$\qquad$ *% Backward pass*
$\qquad \frac{\partial \ell}{\partial C}$ to update parameters of $C$

$\qquad$ *% Updating layer $l$*
$\qquad W_l \leftarrow W_l + \frac{\partial \ell}{\partial W_l}; b_l \leftarrow b_l + \frac{\partial \ell}{\partial b_l}$

$\left. \right\}$ in TEE

$\theta_l = \{W_l, b_l\}$ in TEE

return $\theta_l$

---

- Algorithm 1: This algorithm details the actions taken by PPFL on the server side **11.** When not specified, operations are carried out outside the TEE (i.e., in the Rich Operating System Execution Environment: REE). REE is a standard term for the general execution environment of the system at hand (client or server), defined as all the space in the system outside the TEE (i.e., the trusted space). First (steps **1-2,** Figure 1), the server **11** initializes the global DNN model with random weights or public knowledge **110.** Thus, each layer *l* to be trained is initialized ($\theta_l$) and prepared for broadcast. The server **11** checks all available client devices and constructs a set of participating clients **12** whose TEE **121** is larger than the required memory usage of *l*. Then (step **3,** Figure 1), the server **11** broadcasts a (target training) layer of the model to these participating clients **12,** e.g., via ClientUpdate() (see Algorithm 2). Upon receiving updates from all participating clients **12,** the server **11** decrypts the layer weights, performs secure layer aggregation and averaging (step **6,** Figure 1) inside its TEE **111** and broadcasts the new version of *l* to the clients **12** for the next FL round. Steps from step **2** to step **6** are repeated until the training of *l* converges, or a fixed number of rounds are completed. Then, this layer is considered fully trained ($\theta^0$), the trained layer is passed to REE, and broadcast to all clients **12** to be used for training the next layer. Interestingly, it is also possible to group multiple layers into blocks and train each block inside client TEEs **121** in a similar fashion as the individual layers. This option allows for better utilization of the memory space available inside each TEE **121** and reduces communication rounds for the convergence of more than one layer at the same time. Therefore, after convergence (i.e., when the target training layer or block of layers is fully trained), the client TEE **121** is moved **130** to the next layer or block of layers for training.

- Algorithm 2: This algorithm details the actions taken by PPFL on the client side **12.** Clients **12** load the received model parameters from the server **11** and decrypt and load the target training layer *l* inside their TEE **121.** More specifically, in the front, this new layer *l* connects to the previous pre-trained layer(s) that are frozen during training. In the back, the clients **12** attach on the layer *l* their own derived classifier **122,** which consists of fully connected layers and a softmax layer at the model exit. Then, for each epoch (step **4,** Figure 1), the training process iteratively goes through batches of data and performs both forward and backward passes **123** to update both the layer *l* under training and the classifier **122** inside the TEE **121.** Forward and backward passes **123** (depicted as arrows from/to the classifier 122 to/from the private layers of the client TEE **121** in Figure 1) are the passes that the model training method performs over the model: it proceeds in a "forward" fashion from input layers to end or output layers and trains the model parameters, and then does a "backward" pass, i.e., it goes backwards on these layers from output layers to input layers to correct them, or as we say in DNN training, to back-propagate the weights of the model. During this process, a model partitioned execution technique is utilized, as described below, where intermediate representations of the previously trained layers are passed from the REE to the TEE **121** via shared memory in the forward pass. After local training is complete (i.e., all batches and epochs are done), each client **12** sends via the secure channel (step **5,** Figure 1) the (encrypted) layer's weights from its TEE **121** to the server TEE **111.**

- Model Partitioned Execution: The above learning process is based on a technique that conducts model training (including both forward and backward passes **123**) across REEs and TEEs, namely model partitioned execution. The transmission of the forward activations (i.e., intermediate representation) and updated parameters happens between the REE and the TEE via shared memory. On a high level, when a set of layers is in the TEE **121,** activations are transferred from the REE to the TEE (see Algorithm 2). Assuming global layer *l* is under training, the layer with its classifier **122,** denoted as $C(.)$ in Algorithm 2, are executed in the TEE **121,** and the previous layers (i.e., 1 to *l* - 1) are in the REE. Before training, layer *l*'s parameters are loaded and decrypted securely within the TEE **121.** During the forward pass, local data ***x*** are inputted, and the REE processes the previous layers from 1 to *l* - 1 and invokes a command to transfer the layer *l* - 1's activations (i.e., $T_{l-1}$) to the secure memory through a buffer in shared memory. The TEE **121** switches to the corresponding invoked command in order to receive layer *l* - 1's activations and processes the forward pass of layer *l* and classifier **122,** $C(.)$, in the TEE **121.** During the backward pass, the TEE **121** computes the classifier gradients based on received labels ***y*** and outputs (produced in the forward pass) of $C(.)$, the classifier **122,** and uses them to compute the gradients of the layer *l* in the TEE **121.** The training of this batch of data (i.e., x) finishes here, and there is no need to transfer *l*'s errors from the TEE **121** to the REE via shared memory, as previous layers are frozen outside the TEE **121.** After that, the parameters of layer *l* are encrypted and passed to REE, ready to be uploaded to the server **11,** corresponding to the FL Aggregation technique known as FedSGD (Federated Stochastic Gradient Descent), in which the gradients are averaged by the server **11** proportionally to the number of training samples on each client **12,** and used to make a gradient descent step. In the FedAvg FL Aggregation technique, which is a generalization of FedSGD, which allows local clients to perform more than one batch update on local data and exchanges the updated weights rather than the gradients, multiple batches are required to be processed before updating, and so it repeats the same number of forward and backward passes across the REE and the TEE for each batch of data.

When analyzing the algorithmic complexity of the PPFL and comparing it to standard end-to-end FL, the following facts are found: For the global model's layers $l \in \{1, \ldots, L\}$, the forward and backward pass cost on layer $l$ are denoted as $F_l$ and $B_l$ respectively. The corresponding cost on the classifier $C(.)$ is denoted as $F_c$ and B$c$. Then, in end-to-end FL, the total training cost for one client is defined as in Equation 1 below:

$$\left( \sum_{l=1}^{L} (F_l + B_l) + F_c + B_c \right) \cdot S \cdot E \qquad (1)$$

where $S$ is the number of steps in one epoch (i.e., number of samples inside local datasets divided by the batch size).

As in PPFL all layers before the training layer $l$ are kept frozen, the cost of training layer $l$ is $(\Sigma^l_{k}=1 F_k + F_c + B_l + B_c) \cdot S \cdot E$. Then, by summation, the total cost of all layers is obtained as in Equation 2 below:

$$\left( \sum_{l=1}^{L} \sum_{k=1}^{l} F_k + \sum_{l=1}^{L} B_l + L \cdot (F_c + B_c) \right) \cdot S \cdot E \qquad (2)$$

By comparing Equations 1 and 2, it is found that the overhead of PPFL comes from:

(i) repeated forward pass in previous layers ($l \in \{1,\ldots,l\text{-}1\}$) when training layer $l$, and
(ii) repeated forward and backward pass for the classifier atop layer $l$.

To show the feasibility of the proposed PPFL framework, a full prototype of PPFL system has been implemented and evaluated including server-side and client-side elements of the design, and the secure communication between them.

Intel Software Guard Extensions (Intel® SGX) are implemented at the server-side, while the client devices rely on Open Portable Trusted Execution Environment (OP-TEE™) which is a widely known open-source TEE framework that is supported by different boards equipped with Arm@ TrustZone®. In this scenario, TEE memory is restricted to 128MB at the server-side, while the TEE memory size at the client-side depends on the device used (e.g., 16MiB in HiKey 960 board).

The client-side of PPFL is implemented on a HiKey 960 Board, which has four ARM Cortex™-A73 and four ARM Cortex™-A53 cores configured as 2362MHz and 533MHz, respectively, as well as a 4GB LPDDR4 RAM with 16MiB TEE secure memory (i.e., Arm® TrustZone®), in order to support on-device FL with Arm@ TrustZone®. Since the CPU power/frequency setting can impact the performance of Arm@ TrustZone®, the on-device FL training is executed with full CPU frequency. In order to emulate multiple device clients and their participation in FL rounds, the HiKey board is used in a repeated, iterative fashion, one time per client device.

The server-side of PPFL is implemented on Intel® SGX. For this, an Intel Next Unit of Computing (version NUC8BEK, with i3-8109U CPU and 8GB DDR4-2400MHz) was used with SGX-enabled capabilities.

Besides, a set of bash shell scripts were developed to control the FL process and create the communication channels. For the communication channels between server and client to be secure, standard cryptographic-based network protocols are employed such as SSH (Secure Shell) and SCP (Secure File Copy). All data leaving the TEE are encrypted using the Advanced Encryption Standard (AES) in Cipher Block Chaining (CBC) mode with random Initialization Values (IV) and 128-bit cryptographic keys.

For this experimental evaluation of PPFL, the models employed were DNNs commonly used in the relevant literature (LeNet, AlexNet and VGG9) based on Convolutional Neural Networks (CNNs) as the layer-based learning methods mostly aim at CNN-like DNNs. Two datasets commonly used in FL research are employed: i) MNIST database (Modified National Institute of Standards and Technology database) which is a handwritten digit image (28 x 28) dataset consisting of 60k training samples and 10k test samples with 10 classes, and ii) CIFAR-10 dataset (Canadian Institute For Advanced Research) which is an object image (32 x 32 x 3) dataset consisting of 50k training samples and 10$k$ test samples with 10 classes. The training datasets were partition into 100 clients or parts (one client holds one part) in two versions: i) Independent and Identically Distributed (IID) where one client has samples of all classes; ii) Non-Independent and Identically Distributed (Non-IID) where one client has samples only from two random classes.

To define the threat model, a standard FL context where multiple client devices train a DNN locally and send their (local) model parameters to a remote server, which aggregates these parameters to create a global model, is considered. The goal of adversaries is to obtain sensitive information embedded in the global model through data reconstruction or inference attacks, taking into account two types of adversaries: (i) users of a client device who have access to distinct snapshots of the global model and (ii) the server's owner (e.g., a cloud or edge provider) who has access to the updated model gradients. Adversaries are assumed to be honest-but-curious, meaning that they allow FL algorithms to run as intended while trying to infer as much information as possible from the global model or gradients. Adversaries can have full control (i.e., root privileges) of the server or the client device, and can perform their attacks against any DNN layer. However, attacks against the TEE, such as side-channel and physical attacks are out of scope for the context of this patent.

It is assumed that the server and enough participating FL client devices have a TEE whose memory size is larger than the largest layer of the DNN to be trained. This is the case in current FL DNNs. However, in the unlikely case that a layer does not fit in available TEEs, the network design needs to be adjusted with smaller, but more layer(s), or a smaller training batch size. It is also assumed that there is a secure way to bootstrap trust between the server TEE **111** and each of the client device TEE **121,** and that key management mechanisms exist to update and revoke keys when needed.

The experimental evaluation described below shows that PPFL provides full protection against data reconstruction, property inference, and membership inference attacks, whose outcomes are degraded to random guessing (e.g., noise images or 50% precision scores). The performance evaluation shows that the PPFL is practical as it can significantly improve privacy while incurring small system overheads to the training process at the client-side. Compared to regular end-to-end FL, it provides a similar ML model utility with fewer communication rounds (0.54x), and a similar amount of network traffic (1.002x), compared to the standard federated learning of a complete model, with only ~15% CPU time, ~18% memory usage, and ~21% energy consumption overhead at client-side.

The evaluation of the presented PPFL prototype focuses on assessing the framework from the point of view of (i) privacy of data, (ii) ML model performance, and (iii) client-side system cost. Although ML computations (i.e., model training) have the same precision and accuracy no matter in REEs or TEEs, PPFL changes the FL model training process into a layer-based training. This affects ML accuracy and the number of communication rounds needed for the model to converge (among others). Thus, several metrics and perform extensive measurements were devised to assess overall PPFL performance. The system cost measurements were conducted only on client devices since their computational resources are more limited compared to the server. All experiments are done with 10% of the total number of clients (i.e., 10 out of 100) participating in each communication round. To measure privacy risks and ML model performance, simulations were performed on a cluster with multiple NVIDIA® RTX6000 GPUs (24GB) nodes.

- Model Performance. Three metrics are measured to assess the performance of the model and PPFL-related process:

  i. Test Accuracy: ML accuracy of test data on a given FL model, for a fixed number of communication rounds.
  ii. Communication Rounds: Iterations of communication be- tween server and clients needed in order to achieve a particular test accuracy.
  iii. Amount of communication: Total amount of data exchanged to reach a test accuracy. Transmitted data sizes may be different among communication rounds when considering different layers' sizes in layer-wise training.

- Privacy Assessment. Privacy risk of PPFL is measured by applying three FL-applicable, privacy-related attacks:

  i. Data Reconstruction Attack (DRA)
  ii. Property Inference Attack (PIA)
  iii. Membership Inference Attack (MIA)

- Client-side System Cost. The efficiency of client on-device training is monitored and the following device costs for PPFL-related process information are measured:

  i. CPU Execution Time (s): Time the CPU was used for processing the on-device model training, including time spent in REE and the TEE's user and kernel time, which is reported by getrusage(RUSAGE_SELF).
  ii. Memory Usage (MB): REE memory is added (the maximum resident set size in RAM, accessible by getrusage()) and allocated TEE memory (accessible by mdbg_check(1)) to get the total memory usage.
  iii. Energy Consumption (J): Measured by all energy used to perform one on-device training step when the model runs with/without TEEs. The power to HiKey board is configured as 12V voltage while the current in a 50Hz sampling rate is recorded.

The experimental evaluation of the PPFL shows that:

- Protecting the training process (i.e., gradient updates) inside TEEs and exposing layers only after convergence can thwart data reconstruction and property inference attacks. Also, keeping the last layer of a DNN model inside TEEs mitigates membership inference attacks.
- Greedy layer-wise FL can achieve comparable ML utility with end-to-end FL. While layer-wise FL increases the total of communication rounds needed to finish all layers, it can reach the same test accuracy as end-to-end FL with fewer rounds (0.538x) and amount of communication (1.002x).

- Most PPFL system cost comes from clients' local training: up to ~15% CPU time, ~18% memory usage, and ~21% energy consumption in client cost when training different models and data, compared to training without TEEs.
- Training 2-layer blocks decreases communication cost by at least half, and slightly increases system overhead (CPU time, memory usage, energy consumption) in cases of small models.
- Bootstrapping PPFL training process with pre-trained models can significantly increase ML utility, and reduce overall cost in communications and system overhead. Similarly, bootstrapping PPFL training process with datasets also increase the ML utility when choosing one appropriate number (e.g., 3 or 4 layers of VGG9 on CIFAR10) of last layers.

To measure the exposure of the model to known privacy risks, data reconstruction, property inference, and membership inference attacks (i.e., DRA, PIA, and MIA) are conducted on the PPFL model. The exposure of PPFL to these attacks is compared against a standard, end-to-end FL- trained model. The average performance of each attack is measured in terms fo: Mean-Square-Error (MSE) for the DRA, Area-Under-Curve (AUC) for the PIA, and Precision for the MIA. From the results of the experiment, it becomes clear that, while these attacks can successfully disclose private information in regular end- to-end FL, they fail in PPFL. As DRAs and PIAs rely on intermediate training models (i.e., gradients) that remain protected, PPFL can fully defend against them. The DRA can only reconstruct a fully noised image for any target image (i.e., an MSE of ~1.3 for the specific dataset), while the PIA always reports a random guess on private properties (i.e., an AUC of ~0.5). Regarding the MIA on final trained models, as PPFL keeps the last layer and its outputs always protected inside the client's TEE, this forces the adversary to access only the previous layers, which significantly drops the MIA's advantage (i.e., Precision of ~0.5). Therefore, PPFL can fully address privacy issues raised by the above attacks.

To measure PPFL's communication cost to complete the FL process, when a specific ML performance is desired, first the standard end-to-end FL without TEEs for 150 rounds is executed and recorded the achieved ML performance. Subsequently, the same test accuracy is set as a requirement and the number of communication rounds and amount of communication required by PPFL to achieve this ML performance are measured. Overall, the results in Table 1 show that, while trying to reach the ML performance achieved by the standard end-to-end FL system, PPFL adds small communication overhead, if any, to the FL process. In fact, in some cases, it can even reduce the communication cost, while preserving privacy when using TEEs. As expected, using Non-IID data leads to lower ML performance across the system, which also implies less communication cost for PPFL as well.

**Table 1**

| Model | Data | Baseline Acc.$^\alpha$ | Comm. Rounds | Comm. Amount |
|---|---|---|---|---|
| LeNet | IID | 98.93% | 56 (037$\times$)$^\delta$ | 0.38 $\times$ |
| | Non-IID | 97.06%[6] | - | - |
| AlexNet | IID | 68.50% | 97 (0.65$\times$) | 0.63 $\times$ |
| | Non-IID | 49.49% | 79 (0.53$\times$) | 0.53 X |
| VGG9 | IID | 63.09% | 171 (1.14X) | 2.87 $\times$ |
| | Non-IID | 46.70% | 36 (0.24x) | 0.60 X |

$^\alpha$ Acc.: Test accuracy of 150 communication rounds in end-to-end FL;
$^\delta$ 1$\times$ refers to no overhead; [e]PPFL reaches a maximum of 95.99%.

To measure the communication duration of FL phases, the wall-clock time needed for running PPFL's phases was investigated in one communication round: broadcast of the layer from server to clients, training of the layer at the client device, upload the layer to the server, aggregate all updates from clients and apply FedAvg. Depending on each layer's size and TEE memory size, batch size can start from 1 and go as high as the TEE allows. Table 2 shows the break-down of time taken for each phase, for three models and two datasets (LeNet on MNIST; AlexNet and VGG9 on CIFAR10) and IID data.

**Table 2**

| Model | Method | Duration of FL phases (s) | | | | |
|---|---|---|---|---|---|---|
| | | B.cast$^\alpha$ | Training | Upload | Aggr.$^\delta$ | Total |
| Le | E2E | 4.520 | 2691.0 | 6.645 | 0.064 | 2702.3 |
| Net | PPFL | 18.96 | 6466.2 | 7.535 | 1.887 | 6496.5 |

(continued)

| Model | Method | Duration of FL phases (s) | | | | |
|---|---|---|---|---|---|---|
| | | B.cast$^\alpha$ | Training | Upload | Aggr.$^\delta$ | Total |
| | - *layer 1* | 4.117 | 1063.3 | 1.488 | 0.426 | 1069.8 |
| | - *layer 2* | 4.670 | 2130.6 | 1.627 | 0.692 | 2138.3 |
| | - *layer 3* | 5.332 | 2315.2 | 1.745 | 0.676 | 2323.6 |
| | - *clf.*$^\varepsilon$ | 4.845 | 957.16 | 2.675 | 0.093 | 964.87 |
| Alex | E2E | 14.58 | 3772.0 | 6.122 | 0.061 | 3792.8 |
| Net | PPFL | 57.24 | 14236 | 16.89 | 3.290 | 14316 |
| | - *layer 1* | 16.20 | 2301.8 | 4.690 | 0.129 | 2322.9 |
| | - *layer 2* | 12.56 | 4041.1 | 4.777 | 0.174 | 4058.8 |
| | - *layer 3* | 10.31 | 4609.4 | 5.388 | 0.243 | 4625.6 |
| | -*clf.* | 18.17 | 3283.8 | 2.033 | 2.744 | 3309.5 |
| VGG9 | E2E | 14.10 | 2867.1 | 8.883 | 0.067 | 2890.2 |
| | PPFL | 353.5 | 21389 | 173.8 | 4.066 | 21924 |
| | - *layer 1* | 127.5 | 4245.7 | 95.58 | 0.375 | 4469.5 |
| | - *layer 2* | 77.22 | 2900.6 | 24.82 | 0.207 | 3003.1 |
| | - *layer 3* | 79.18 | 3703.1 | 24.84 | 0.223 | 3807.6 |
| | - *layer 4* | 27.05 | 2987.9 | 12.15 | 0.235 | 3027.6 |
| | - *layer 5* | 21.47 | 2404.4 | 9.137 | 0.347 | 2435.7 |
| | - *layer 6* | 10.95 | 2671.0 | 4.768 | 0.571 | 2687.9 |
| | -*clf.* | 10.11 | 2476.4 | 2.478 | 2.108 | 2493.2 |

$^\alpha$B.cast: Broadcast; $^\delta$Aggr.: Aggregation; $^e$clf.: Classifier.

As expected, layer-wise FL increases the total time compared to end-to-end FL because each layer is trained separately, but the previously trained and finalized layers still need to be processed in the forward pass. On the one hand, applications can tolerate this additional delay to be protected from privacy-related attacks, despite the increase is non-negligible and up to a few hours of training. Indeed, models are usually (re)trained on longer timescales (e.g., weekly, monthly). On the other hand, training one layer in PPFL costs similar time to the end-to-end FL training of the complete model. This highlights that the minimum client contribution time is the same as end-to-end FL, since clients can choose to participate in only one round and layer. Among all FL phases, local training costs the most, while the time spent in server aggregation and averaging is trivial, regardless if it is non-secure (i.e., end-to-end FL) or secure (PPFL). Regarding VGG9, layer-wise training of early layers significantly increases the communication time in broadcast and upload, because the Conv layers are with a small number of filters and consequently the following classifier's FC layer has a large size. This finding hints that selecting suitable DNNs to be trained in PPFL (e.g., AlexNet vs. VGG9) is crucial for practical performance. Moreover, it may not be necessary to train all layers to reach the desired ML utility.

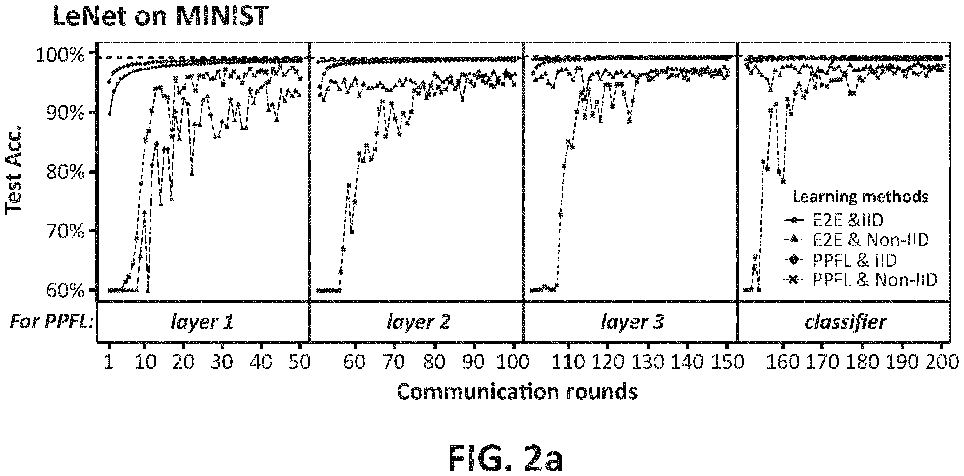

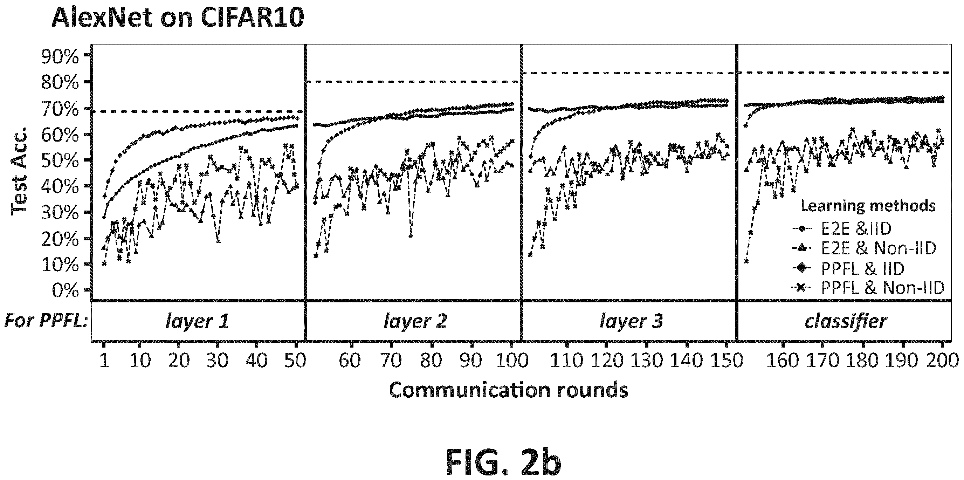

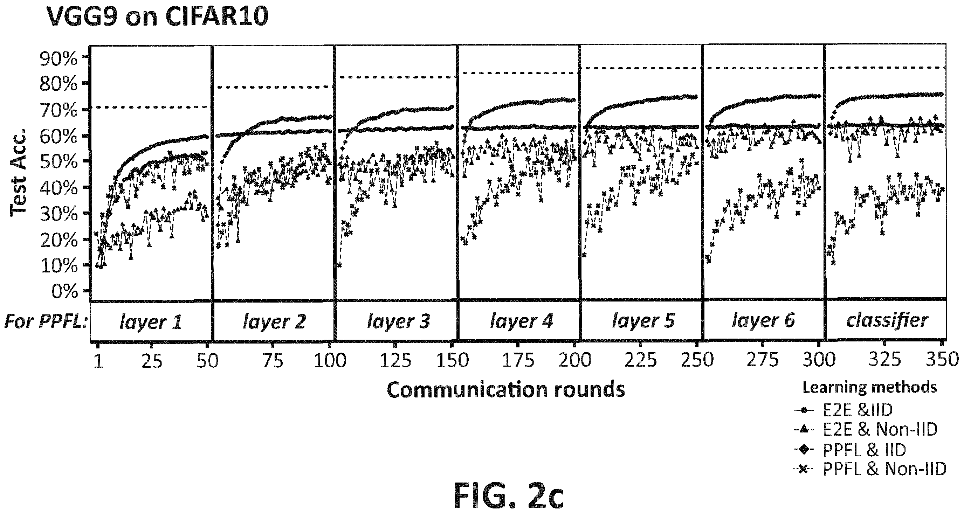

Figure 2 shows the test accuracy of training the DNN models, for each of the three models, on the two datasets considered for the experiment (Figure 2a corresponds to the LeNet model training on MNIST dataset, Figure 2b corresponds to the AlexNet model training on CIFAR10 dataset and Figure 2c corresponds to the VGG9 model training on CIFAR10 dataset) when using PFFL. The horizontal dashed lines refer to the accuracy that the centralized training reaches after 50 epochs. Training LeNet on the "easy" task of MNIST data (IID or not) leads quickly to high ML performance, regardless of the FL system used. Training AlexNet on IID and Non-IID CIFAR10data can lead to test accuracy of 74% and 60.78%, respectively, while centralized training reaches 83.34%. Training VGG9, which is a more complex model on IID and Non-IID CIFAR10 data leads to lower performances of 74.60% and 38.35%, respectively, while centralized training reaches 85.09%. There is a drop of performance in PPFL when every new layer is considered into training. This is to be expected, since PPFL starts from scratch with the new layer, leading to a significant performance drop in the first FL rounds. Of course, towards the end of the 50 rounds, PPFL performance matches and in some cases sur- passes that of end-to-end FL. In general, with more layers being included in the training, the test accuracy increases.

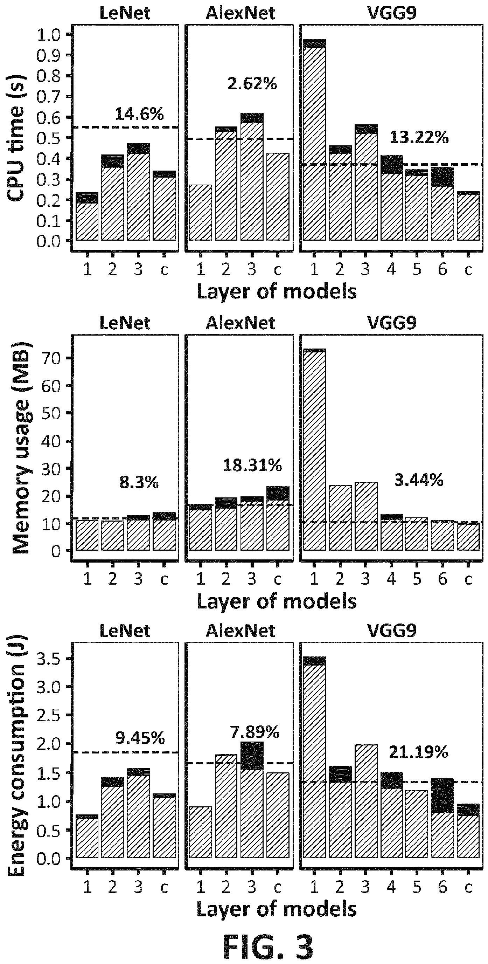

Figure 3 shows the system performance of the client devices when training the DNN models, for each of the three models considered for the experiment (LeNet, AlexNet and VGG9) when using PFFL, measuring the system performance in terms of CPU time in Figure 3a, memory usage in Figure 3b and energy comsuption in Figure 3c. The light grey bar refers to learning without TEEs and the black bar refers to overhead when the target training layer is inside the TEE. Percentage (%) of the overhead (averaged on one model) is depicted above these bars. Horizontal dashed lines signify the cost of end-to-end FL. In x-axis, "c" refers to the classifier.

if the TEEs can hold more than one layers, it is also possible to put a block of layers inside the TEE for training. Indeed, heterogeneous devices and TEEs can have different memory sizes, thus supporting a wide range of block sizes. For these experiments, it is assumed all devices have the same TEE size and construct 2-layer blocks, measuring the system's test accuracy and ML performance on CIFAR10.

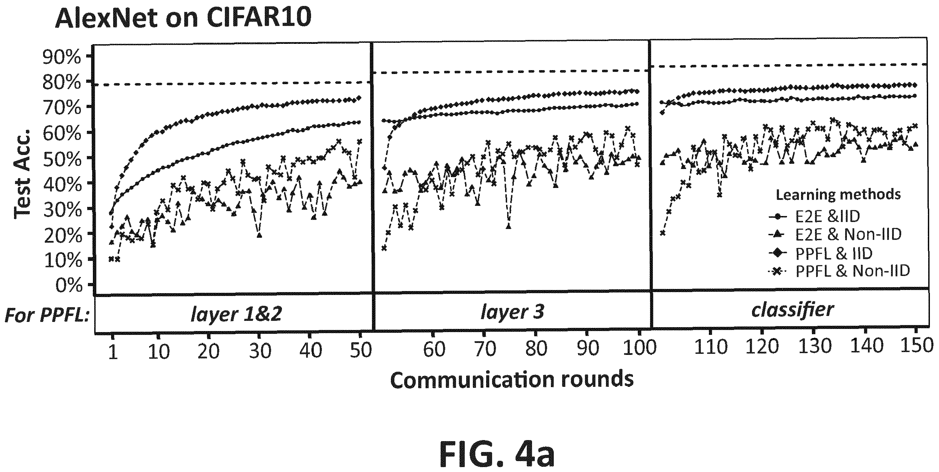

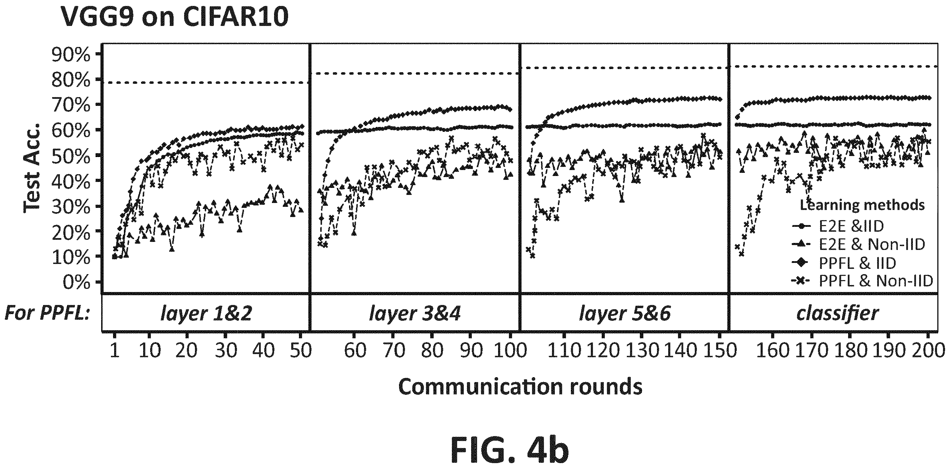

Figure 4 shows the test accuracy of training the DNN models, for AlexNet model and VGG9 model (Figure 4a corresponds to the AlexNet model training and Figure 4b corresponds to the VGG9 model training), both trained on CIFAR10 dataset when using PFFL with blocks of two model layers in TEE. The horizontal dashed lines refer to the accuracy that the end-to-end (E2E) FL reaches after 50 communication rounds. Results in Figure 4 indicate that training blocks of layers can reach similar or even better ML performance compared to training each layer separately (i.e., as shown in Figure 2). It can also improve the test accuracy of complex models such as VGG9, for which a degradation of ML performance is caused by the first layer's small size and incapacity to model the data (see Fig. 2). In addition, compared to training one layer at a time, training 2-layer blocks reduces the total required communication to reach the desired ML performance.

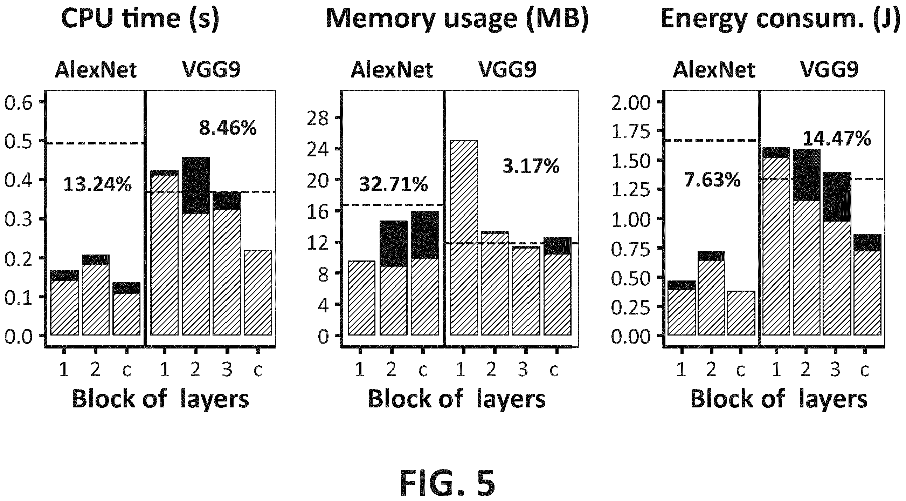

Figure 5 shows the system performance of the client devices when training the DNN models, measuring the system performance in terms of CPU time in Figure 5a, memory usage in Figure 5b and energy comsuption in Figure 5c, for AlexNet and VGG9 models when using PFFL with blocks of two model layers in TEE for both models. The light grey bar refers to learning without TEEs and the black bar refers to overhead when the target training layer is inside the TEE. Percentage (%) of the overhead (averaged on one model) is depicted above these bars. Horizontal dashed lines signify the cost of end-to-end FL. In x-axis, "c" refers to the classifier. Cost results across models show that the maximum overhead is 13.24% in CPU time, 32.71% in memory usage, and 14.47% in energy consumption. Compared to training one layer at a time, training layer blocks does not always increase the overhead. For example, overhead when running VGG9 drops from 13.22% to 8.46% in CPU, from 2.44% to 3.17% in memory usage, and from 21.19% to 14.47% in energy consumption. Combining layers into blocks amortizes the cost of "expensive" with "cheap" layers. Interestingly, PPFL still has a comparable cost with end-to-end FL training.

Furthermore, the back-end server of PPFL can use existing, public models to bootstrap the training process for a given task. For this purpose, two public models (MobileNetv2 and VGG16) are pre-trained on ImageNet dataset to the classification task on CIFAR10 (for both IID and Non-IID cases). Because these pre-trained models contain sufficient knowledge relevant to the target task, training the last few layers is already adequate for a good ML performance. Consequently, all Conv layers can be frozen and the last FC layers can be trained within TEEs, thus protecting them as well. By default, MobileNetv2 has one FC layer, and VGG16 has three FC layers at the end.

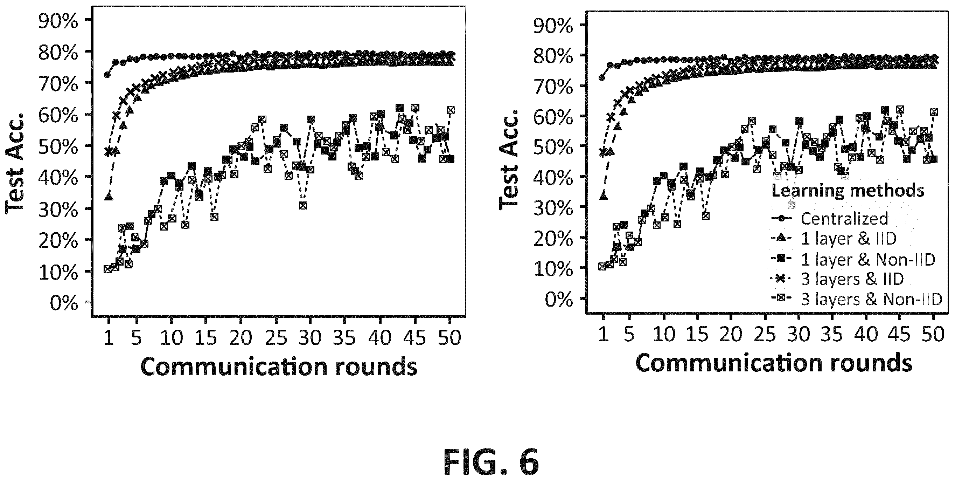

Figure 6 shows that the use of pre-trained first layers (i.e., feature extractors) to bootstrap the learning process can help the final PPFL models reach test accuracy similar to centralized training. Figure 6a corresponds to train and test processes using the FC layers 1 and 3 attached at the end of the MobileNetv2 model, while Figure 6b corresponds to train and test processes using the FC layers 1 and 3 attached at the end of the VGG16 model. Interestingly, transferring pre-trained layers from VGG16 (can reach higher test accuracy than MobileNetv2. This is expected because VGG16 contains many more DNN parameters than MobileNetv2, which provides better feature extraction capabilities. Surprisingly, attaching and training more FC layers at the end of any of the models does not improve test accuracy. This can be due to the bottleneck of the transferred feature extractors, which since they are frozen, they do not allow the model to fully capture the variability of the new data.

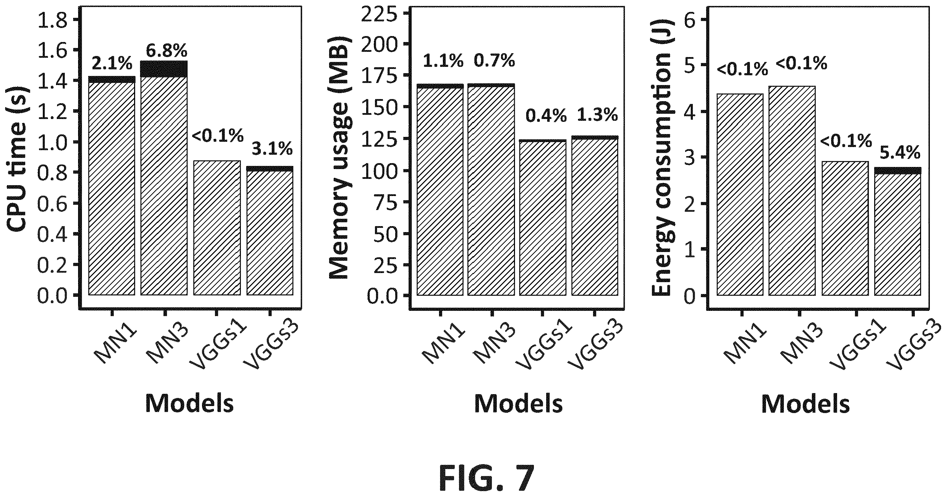

Regarding client-side cost measures, Figure 7 shows the system performance of the client devices when training with transferred public models on CIFAR10 dataset. Results shown in Figure 7, measuring the system performance in terms of CPU time in Figure 7a, memory usage in Figure 7b and energy comsuption in Figure 7c, indicate that when training and keeping the last FC layers inside the client's on-device TEEs, there is only a small overhead incurred in terms of CPU time (6.9%), memory usage (1.3%), and energy consumption (5.5%) in either model. The light grey bar refers to learning without TEEs and the black bar refers to overhead when the target training layer is inside the TEE. Percentage (%) of the overhead (averaged on one model) is depicted above these bars corresponding respectively to MobileNetv2 model with one layer (MN1) and three layers (MN3) and to a small size of VGG16 model with one layer (VGGs1) and three layers (VGGs3). These results of Figures 7a-7c highlight that transferring knowledge can be a good alternative for boot-strapping PPFL training and keep system overhead low.

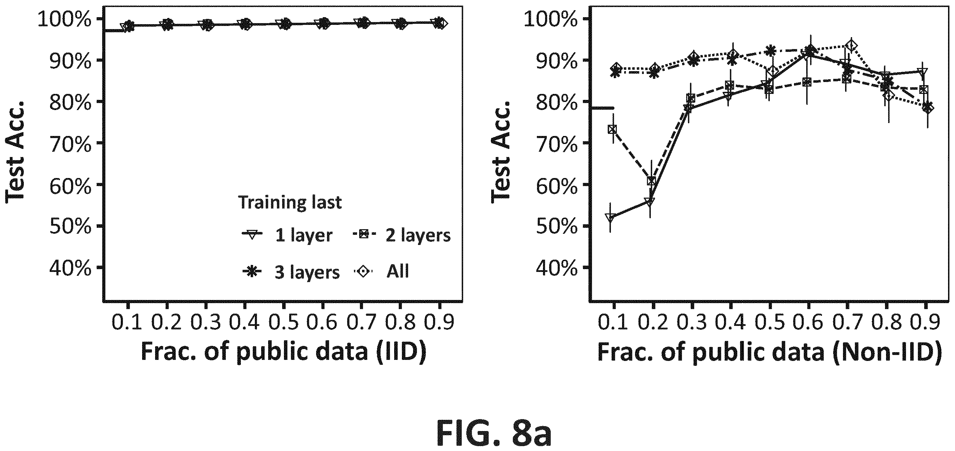

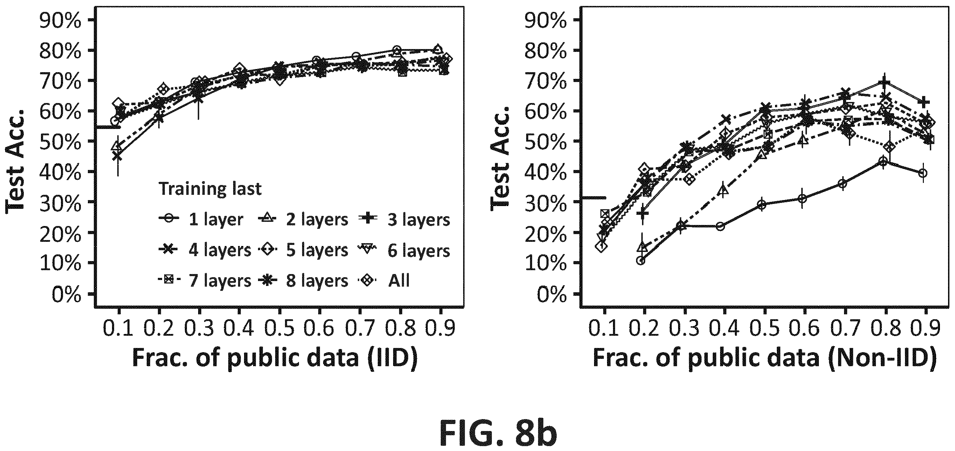

Figure 8 shows the test accuracy of training DNN models, LeNet model and VGG9 model (Figure 8a corresponds to the LeNet model trained on MNIST dataset and Figure 8b corresponds to the VGG9 model trained on CIFAR10 dataset), when learning with public datasets. The horizontal short line starting from y-axis refers to the accuracy of the end-to-end (E2E) FL bootstraping the public datasets. It is indicated that in general when the server holds more public data, the final global model can reach a higher test accuracy. This is as expected since the server gathers a larger part of the training datasets. With complete training datasets, this process will finally become centralized training. Nevertheless, this indication is not always held. The two graphics of Figure 8a correspond to the transfer from the public MNIST to train LeNet. The two graphics of Figure 8b correspond to the transfer from the public CIFAR10 to train VGG9. For example, in the IID case (see the left graphics of Figures 8a-8b), when training all layers, servers with public data of 0.1 fraction outperform servers without public data, i.e., the end-to-end FL, while regarding Non-IID of CIFAR10, servers with 0.1 fraction cannot outperform that without public data (see right Figure 8b). One reason for it is that the first layers, which are trained on public datasets, cannot represent all features of privacy datasets. It is also observed that when the server does not have enough public data (e.g., 0.1 fraction), training only the last 1 or 2 layers can lead to extremely low performance or even failure. Still, this is because the first layers cannot represent clients' datasets well. Another observation is that the number of training last layers does not have a significant influence on test accuracy in terms of IID cases, especially when the server holds more public data. This is because learning from IID public data is able to represent the feature space of the complete (private) training datasets. However, the results change when it comes to the Non-IID case (see the right graphics of Figures 8a-8b); the number of training last layers has a significant influence on test accuracy. For instance, regarding VGG9, training only the last 1 or 2 layers at the client-side perform much worse compared to training 3 or 4 layers (see right graphic of Figure 8b). Moreover, training 3 or 4 layers tend to have better test accuracy than training more layers (e.g., all layers). The feature extraction capability of first layers is good enough when the server has many public data, so fine-tuning these first layers at the client (e.g., training all layers) may destroy it and consequently drop the accuracy. Overall, by training only the last several layers at the client-side, PPFL with public datasets can guarantee privacy, and in the meanwhile, achieve better performance than that of training all layers.

The description and drawings merely illustrate the principles of the invention.

Although the present invention has been described with reference to specific embodiments, it should be understood by those skilled in the art that the foregoing and various other changes, omissions and additions in the form and detail thereof may be made therein without departing from the scope of the invention as defined by the following claims. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

Note that in this text, the term "comprises" and its derivations (such as "comprising", etc.) should not be understood in an excluding sense, that is, these terms should not be interpreted as excluding the possibility that what is described and defined may include further elements, steps, etc.

**Claims**

1. A method for preserving data privacy of deep neural network, DNN, models, wherein a server (11) and a set of available clients, both comprising a trusted execution environment, TEE, agree on training a DNN model via federated learning, the server (11) comprising a server TEE (111) and each client comprising a client TEE (121) and informing the server (11) about memory constraints of the client TEE (121), the method **characterized by** comprising the following steps:

   i) initializing the DNN model by the server (11), wherein the initializing of the DNN model is performed within the server TEE (111) and comprises:

   - defining a set of model layers or a set of blocks of model layers to be trained and determining memory constraints of the set,
   - initializing model parameters and hyper-parameters of the DNN model;

   ii) selecting from the set of available clients one or more participating clients (12) whose memory constraints of the client TEE (121) meet the determined memory constraints of the set of model layers or blocks of model layers to be trained;
   iii) broadcasting from the server (11) to each participating client (12) a target training layer or a target training block of layers from the defined set to be trained, the broadcast being perfomed through a secure channel established by the server (11) between the server TEE (111) and the client TEE (121);

iv) local training of the broadcasted target training layer or block of layers by each participating client (12) within the client TEE (121) using a model partitioned execution, wherein the model parameters and hyper- parameters are updated through forward and backward passes (123), between the client TEE (121) and a rich execution environment, REE, of the participating client (12), and intermediate representations of previously trained layers or block of layers are passed from the REE to the client TEE (121) in the forward pass via shared memory of the participating client (12);

v) once local training of the broacasted target training layer or block of layers is completed, reporting by every participating client (12) to the server (11), through the secure channel, the updated model parameters and hyper-parameters corresponding to the target training layer or block of layers;

vi) aggregating by the server (11) the reported parameters within the server TEE (111) by applying a federated learning aggregation technique;

vii) repeating the steps from ii) to vi) for each layer or block of layers from the set to be trained defined in step i).

**2.** The method according to claim 1, wherein the federated learning aggregation technique is federated averaging, FedAvg; or the federated learning aggregation technique is federated stochastic gradient descent, FedSGD.

**3.** The method according to any preceeding claim, wherein initializing the DNN model further comprises transferring public knowledge (110) through the secure channel from the server (11) to each participating client (12).

**4.** The method according to claim 3, wherein the public knowledge (110) is a pre-trained public DNN model and defining the set of model layers or blocks of model layers to be trained comprises reserving one or more first model layers, removing the last model layers and attaching one or more model layers to the reserved layers.

**5.** The method according to claim 3, wherein the public knowledge (110) is a public dataset and initializing model parameters and hyper-parameters of the DNN model is based on the public dataset.

**6.** The method according to any preceeding claim, wherein the secure channel uses cryptographic keys known only by the server TEE (111) and by the client TEE (12) to encrypt all the data transferred through the secure channel.

**7.** A system for preserving data privacy of deep neural network, DNN, models, the system comprising a server (11) and at least a client (12), both comprising a trusted execution environment, TEE, the server (11) comprising a server TEE (111) and the client (12) comprising a client TEE (121) whose memory constraints are reported from the client (12) to the the server (11), wherein the server (11) and the client (12) agree on training a DNN model via federated learning;

the system being **characterized by** further comprising a secure channel established by the server (11) between the server TEE (111) and the client TEE (121), and **in that:**

the server (11) is configured to perform the following steps:

- initializing the DNN model within the server TEE (111) by defining a set of model layers or a set of blocks of model layers to be trained, determining memory constraints of the set, checking that the reported memory constraints of the client TEE (121) meet the determined memory constraints, and initializing model parameters and hyper-parameters of the DNN model;

- broadcasting a target training layer or a target training block of layers from the defined set to be trained through the secure channel to the client (12);

- aggregating within the server TEE (111), by applying a federated learning aggregation technique, model parameters and hyper-parameters of the target training layer or a target training block of layers reported by the client (12);

and the client (12) is configured to perform the following steps:

- local training of the broadcasted target training layer or block of layers within the client TEE (121) using a model partitioned execution, wherein the model parameters and hyper-parameters are updated through forward and backward passes (123), between the client TEE (121) and a rich execution environment, REE, of the client (12), and intermediate representations of previously trained layers or block of layers are passed from the REE to the client TEE (121) in the forward pass via shared memory of the client (12);

- once local training of the broacasted target training layer or block of layers is completed, reporting to the server (11), through the secure channel, the updated model parameters and hyper-parameters corresponding to the target training layer or block of layers.

8. The system according to claim 7, wherein the server (11) is further configured to transfer public knowledge (110) through the secure channel (11) to the client (12), wherein the public knowledge (110) is used in local training by the client (12).

9. The system according to claim 8, wherein the public knowledge (110) is a pre-trained public DNN model and defining the set of model layers or blocks of model layers to be trained comprises reserving one or more first model layers, removing the last model layers and attaching one or more model layers to the reserved layers.

10. The system according to claim 8, wherein the public knowledge (110) is a public dataset and initializing model parameters and hyper-parameters of the DNN model is based on the public dataset.

11. The system according to any of claims 7-10, wherein, for aggregating within the server TEE (111), the server (11) is configured to apply federated averaging, FedAvg, or to apply federated stochastic gradient descent, FedSGD.

12. The system according to any of claims 7-11, wherein the secure channel uses cryptographic keys known only by the server TEE (111) and by the client TEE (12) to encrypt all the data transferred through the secure channel

13. A non-transitory digital data storage medium for storing a computer program which comprises instructions causing a computer executing the program to perform the method according to any of the claims 1-6.

**FIG. 1**

FIG. 2a

**FIG. 2b**

FIG. 2c

EP 4 083 868 A1

**FIG. 3**

FIG. 4a

VGG9 on CIFAR10

FIG. 4b

FIG. 5

EP 4 083 868 A1

FIG. 6

FIG. 7

FIG. 8a

**FIG. 8b**

Europäisches
Patentamt

European
Patent Office

Office européen
des brevets

# EUROPEAN SEARCH REPORT

**Application Number**

EP 21 38 2368

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | Kairouz Peter ET AL: "Advances and Open Problems in Federated Learning", , 9 March 2021 (2021-03-09), XP055797828, Retrieved from the Internet: URL:https://arxiv.org/pdf/1912.04977.pdf [retrieved on 2021-04-21] * sections 1.1.2, 3.1, 4.3.3, 7.2.1 * | 1-13 | INV. G06N3/04 G06N3/08 |
| A | ABDULRAHMAN SAWSAN ET AL: "FedMCCS: Multicriteria Client Selection Model for Optimal IoT Federated Learning", IEEE INTERNET OF THINGS JOURNAL, IEEE, USA, vol. 8, no. 6, 5 October 2020 (2020-10-05) , pages 4723-4735, XP011843458, DOI: 10.1109/JIOT.2020.3028742 [retrieved on 2021-03-04] * section IV * | 1-13 | |
| A | FAN MO ET AL: "Layer-wise Characterization of Latent Information Leakage in Federated Learning", ARXIV.ORG, CORNELL UNIVERSITY LIBRARY, 201 OLIN LIBRARY CORNELL UNIVERSITY ITHACA, NY 14853, 17 October 2020 (2020-10-17), XP081789803, * section VII.B * | 1-13 | **TECHNICAL FIELDS SEARCHED (IPC)** G06N |
| A | US 2019/042878 A1 (SHELLER MICAH [US] ET AL) 7 February 2019 (2019-02-07) * paragraphs [0034] - [0038], [0061]; figure 2 * | 1-13 | |

The present search report has been drawn up for all claims

| Place of search | Date of completion of the search | Examiner |
|---|---|---|
| Munich | 6 October 2021 | Montoneri, Fabio |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

EP 4 083 868 A1

## ANNEX TO THE EUROPEAN SEARCH REPORT
## ON EUROPEAN PATENT APPLICATION NO.

EP 21 38 2368

This annex lists the patent family members relating to the patent documents cited in the above-mentioned European search report.
The members are as contained in the European Patent Office EDP file on
The European Patent Office is in no way liable for these particulars which are merely given for the purpose of information.

06-10-2021

| Patent document cited in search report | Publication date | Patent family member(s) | Publication date |
|---|---|---|---|
| US 2019042878 A1 | 07-02-2019 | NONE | |

EPO FORM P0459

For more details about this annex : see Official Journal of the European Patent Office, No. 12/82

30

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **HUANG, T. et al.** *An efficiency-boosting client selection scheme for federated learning with fairness guarantee,* 2020
- **NISHIO, T. et al.** Client selection for federated learning with heterogeneous resources in mobile edge. *IEEE International Conference on Communications, IEEE ICC,* 2019, 1-7

- **MCMAHAN, B. et al.** Communication-efficient learning of deep networks from decentralized data. *Artificial Intelligence and Statistics,* 2017, 1273-1282